# EUROPEAN PATENT APPLICATION

(11) **EP 4 661 591 A1**
(43) Date of publication of application: **10.12.2025**
(21) Application number: 23919125.7
(22) Date of filing: 03.02.2023
(51) Int. Cl.: H04W 76/28

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2023/074485
(87) International publication number: WO 2024/159551

(57) **Abstract**

Embodiments of the present disclosure provide an information processing method and apparatus, a communication device, and a storage medium. The information processing method executed by a user equipment (UE) may comprise: sending first indication information, wherein the first indication information is used for determining whether the UE supports a first extended discontinuous reception (eDRX) cycle of an inactive state, and the duration of the first eDRX cycle is greater than a preset value.

## Description

### TECHNICAL FIELD

The present disclosure relates to, but is not limited to, the field of wireless communication technology, and specifically to an information processing method and apparatus, a communication device and a storage medium.

### BACKGROUND

A User Equipment (UE) may also be referred to as a terminal. For services giving consideration to both low power consumption and certain latency requirements, an extended discontinuous reception (eDRX) function for UEs is proposed. The terminal is awake and falls to sleep according to an eDRX cycle of the eDRX function.

If the eDRX cycle is long enough, there is one paging time window (PTW) in each eDRX cycle. The UE is woken up and falls to sleep according to discontinuous reception (DRX) within the PTW, and monitors a paging channel in an awake state to receive downlink data. The UE is in a sleep state for the rest of time. If the DRX cycle is short, it can be considered that the UE is not in the sleep state, that is, the UE is always reachable.

### SUMMARY

Accordingly, embodiments of the present disclosure provide an information processing method and apparatus, a communication device and a storage medium.

According to a first aspect of the embodiments of the present disclosure, an information processing method is provided and performed by a user equipment (UE), including:
sending first indication information, in which the first indication information is configured to determine whether the UE supports a first extended discontinuous reception (eDRX) cycle in an inactive state, and a duration of the first eDRX cycle is greater than a pre-defined value.

According to a second aspect of the embodiments of the present disclosure, an information processing method is provided and performed by a first base station, including:
receiving first indication information, in which the first indication information is configured to determine whether a user equipment (UE) supports a first extended discontinuous reception (eDRX) cycle in an inactive state, and a duration of the first eDRX cycle is greater than a pre-defined value.

According to a third aspect of the embodiments of the present disclosure, an information processing method is provided and performed by a second base station, including:
receiving first indication information, in which the first indication information is configured to determine whether a user equipment (UE) supports a first extended discontinuous reception (eDRX) cycle in an inactive state, and a duration of the first eDRX cycle is greater than a pre-defined value.

According to a fourth aspect of the embodiments of the present disclosure, an information processing method is provided and performed by a core network device, including:
receiving first indication information, in which the first indication information is configured to determine whether a user equipment (UE) supports a first extended discontinuous reception (eDRX) cycle in an inactive state, and a duration of the first eDRX cycle is greater than a pre-defined value.

According to a fifth aspect of the embodiments of the present disclosure, an information processing apparatus is provided, including:
a first sending module, configured to send first indication information, in which the first indication information is configured to determine whether the UE supports a first extended discontinuous reception (eDRX) cycle in an inactive state, and a duration of the first eDRX cycle is greater than a pre-defined value.

According to a sixth aspect of the embodiments of the present disclosure, an information processing apparatus is provided, including:
a first receiving module, configured to receive first indication information, in which the first indication information is configured to determine whether a user equipment (UE) supports a first extended discontinuous reception (eDRX) cycle in an inactive state, and a duration of the first eDRX cycle is greater than a pre-defined value.

According to a seventh aspect of the embodiments of the present disclosure, an information processing apparatus is provided, including:
a second receiving module, configured to receive first indication information, in which the first indication information is configured to determine whether a user equipment (UE) supports a first extended discontinuous reception (eDRX) cycle in an inactive state, and a duration of the first eDRX cycle is greater than a pre-defined value.

According to an eighth aspect of the embodiments of the present disclosure, an information processing apparatus is provided, including:
a third receiving module, configured to receive first indication information, in which the first indication information is configured to determine whether a user equipment (UE) supports a first extended discontinuous reception (eDRX) cycle in an inactive state, and a duration of the first eDRX cycle is greater than a pre-defined value.

According to a ninth aspect of the embodiments of the present disclosure, a communication device is provided, including: a processor, a transceiver, a memory, and an executable program stored on the memory and executable by the processor. The processor is configured to perform the information processing method of any technical solution of the embodiments of the first aspect to the fourth aspect when executing the executable program.

According to a tenth aspect of the embodiments of the present disclosure, a computer storage medium for storing an executable program is provided. When the executable program is executed by a processor, the information processing method of any technical solution of the embodiments of the first aspect to the fourth aspect is implemented.

With the technical solution provided by the embodiments of the present disclosure, the UE may inform a peer device of a capability whether the UE supports the eDRX cycle greater than the pre-defined value in the inactive state by reporting the first indication information. When the peer device is a network device, the network device may configure an eDRX parameter in the inactive state for the UE according to the first indication information, to enable the configured eDRX parameter to conform to the UE's capability and meet the UE's requirements for a data transmission latency and low power consumption.

It should be understood that the foregoing general description and the following detailed description are exemplary and explanatory only and are not restrictive of the embodiments of the present disclosure.

### BRIEF DESCRIPTION OF THE DRAWINGS

The accompanying drawings, which are incorporated in and constitute a part of the specification, illustrate embodiments consistent with the present disclosure, and serve to explain the principle of the embodiments of the present disclosure together with the specification.
FIG. 1A is a schematic diagram of a wireless communication system according to an embodiment of the present disclosure;
FIG. 1B is a time domain diagram of an extended discontinuous reception (eDRX) function according to an embodiment of the present disclosure;
FIG. 1C is a schematic diagram of a process for configuring an eDRX parameter related to an eDRX function according to an embodiment of the present disclosure;
FIG. 2A is a flowchart of an information processing method according to an embodiment of the present disclosure;
FIG. 2B is a flowchart of an information processing method according to an embodiment of the present disclosure;
FIG. 2C is a flowchart of an information processing method according to an embodiment of the present disclosure;
FIG. 2D is a flowchart of an information processing method according to an embodiment of the present disclosure;
FIG. 2E is a flowchart of an information processing method according to an embodiment of the present disclosure;
FIG. 2F is a flowchart of an information processing method according to an embodiment of the present disclosure;
FIG. 2G is a flowchart of an information processing method according to an embodiment of the present disclosure;
FIG. 2H is a flowchart of an information processing method according to an embodiment of the present disclosure;
FIG. 2I is a flowchart of an information processing method according to an embodiment of the present disclosure;
FIG. 3A is a flowchart of an information processing method according to an embodiment of the present disclosure;
FIG. 3B is a flowchart of an information processing method according to an embodiment of the present disclosure;
FIG. 3C is a flowchart of an information processing method according to an embodiment of the present disclosure;
FIG. 3D is a flowchart of an information processing method according to an embodiment of the present disclosure;
FIG. 3E is a flowchart of an information processing method according to an embodiment of the present disclosure;
FIG. 3F is a flowchart of an information processing method according to an embodiment of the present disclosure;
FIG. 3G is a flowchart of an information processing method according to an embodiment of the present disclosure;
FIG. 3H is a flowchart of an information processing method according to an embodiment of the present disclosure;
FIG. 3I is a flowchart of an information processing method according to an embodiment of the present disclosure;
FIG. 3J is a flowchart of an information processing method according to an embodiment of the present disclosure;
FIG. 3K is a flowchart of an information processing method according to an embodiment of the present disclosure;
FIG. 3L is a flowchart of an information processing method according to an embodiment of the present disclosure;
FIG. 4A is a flowchart of an information processing method according to an embodiment of the present disclosure;
FIG. 4B is a flowchart of an information processing method according to an embodiment of the present disclosure;
FIG. 5A is a flowchart of an information processing method according to an embodiment of the present disclosure;
FIG. 5B is a flowchart of an information processing method according to an embodiment of the present disclosure;
FIG. 6 is a block diagram of an information processing apparatus according to an embodiment of the present disclosure;
FIG. 7 is a block diagram of an information processing apparatus according to an embodiment of the present disclosure;
FIG. 8 is a block diagram of an information processing apparatus according to an embodiment of the present disclosure;
FIG. 9 is a block diagram of an information processing apparatus according to an embodiment of the present disclosure;
FIG. 10 is a block diagram of a user equipment (UE) according to an embodiment of the present disclosure; and
FIG. 11 is a block diagram of a network device according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of the embodiments of the present disclosure, the first information may also be referred to as the second information, and likewise the second information may be referred to as the first information. Depending on the context, the words "if" and "in a case" used here may be interpreted as "when" or "in response to determining". For example, the meanings of "in some embodiments", "in an embodiment", "understandably" or "optionally" or "further" are the same or similar, and can be replaced or equivalent to each other.

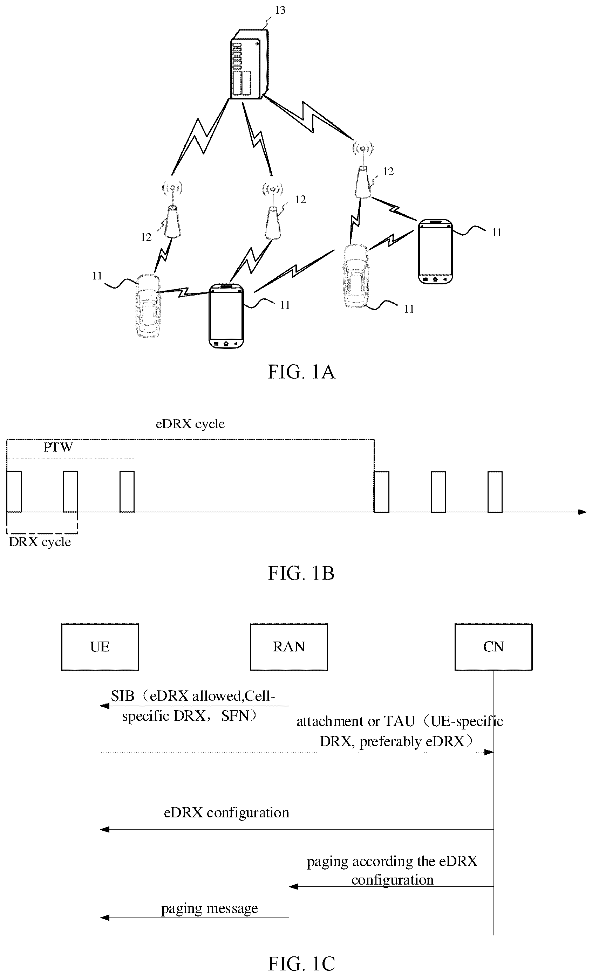

Please refer to FIG. 1A, which is a schematic diagram of a wireless communication system according to an embodiment of the present disclosure. As illustrated in FIG. 1A, the wireless communication system is a communication system based on the cellular mobile communication technology, and the wireless communication system may include several UEs 11, and several access devices 12.

In some embodiments, the communication system may further include one or more core network devices, which is not shown in FIG. 1A. The core network device includes, but is not limited to, a mobile management entity (MME) or an access management function (AMF), etc.

The UE 11 may be a device that provides voice and/or data connectivity to users. The UE 11 may communicate with one or more core networks via a radio access network (RAN). The UE 11 may be an Internet of Things (IoT) UE, such as a sensor device, a mobile phone (or a "cellular" phone), and a computer with an IoT UE. For example, the UE may be a fixed, portable, pocket-sized, handheld, computer-built-in or vehicle-mounted device. For example, the UE may be a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may also be a device of an unmanned aerial vehicle (UAV). Alternatively, the UE 11 may also be a vehicle-mounted device, for example, the UE may be a driving computer with a wireless communication function, or a wireless communication device externally connected to the driving computer. Alternatively, the UE 11 may also be a roadside device, for example, a street lamp, a signal lamp or other roadside devices with a wireless communication function.

The access device 12 may be a network side device in the wireless communication system. The wireless communication system may be a fourth-generation mobile communication (4G) system, also known as a long-term evolution (LTE) system; or the wireless communication system may be a 5G system, also known as a new radio (NR) system or a 5G NR system. Alternatively, the wireless communication system may be a next generation system of the 5G system. The access network in the 5G system may be referred to as new generation-radio access network (NG-RAN). Alternatively, the wireless communication system may be a machine type communication (MTC) system.

The access device 12 may be an evolved access device (eNB) adopted in the 4G system. Alternatively, the access device 12 may also be a base station (gNB) adopting a centralized distributed architecture in the 5G system. When the access device 12 adopts the centralized distributed architecture, it usually includes a central unit (CU) and at least two distributed units (DUs). The central unit is provided with a protocol stack including a packet data convergence protocol (PDCP) layer, a radio link layer control protocol (RLC) layer, and a media access control (MAC) layer; the distributed unit is provided with a protocol stack including a physical (PHY) layer. The specific implementation of the access device 12 is not limited in the embodiments of the present disclosure.

A wireless connection may be established between the access device 12 and the UE 11 via a wireless air interface. In different implementations, the wireless air interface is a wireless air interface based on a fourth generation mobile communication network technology (4G) standard; or the wireless air interface is a wireless air interface based on a fifth generation mobile communication network technology (5G) standard, for example, the wireless air interface is a new radio interface; or the wireless air interface may also be a wireless air interface based on a next generation mobile communication network technology standard of the 5G standard.

If the UE supports an eDRX function, the UE may enter an eDRX mode according to an eDRX parameter, and the UE entering the eDRX mode has the following characteristics: the UE is reachable at any time, but the reachability delay is large, and the delay depends on a configuration of an eDRX cycle.

If the UE enables the eDRX function, the UE may fall to sleep and may be woken up within the eDRX cycle corresponding to the eDRX function, so that the UE may achieve a balance between the UE's power consumption and the timeliness of data transmission to the maximum extent possible.

The eDRX parameter may be used at least to determine the eDRX cycle. In some embodiments, the eDRX parameter may also be used to determine a paging time window (PTW).

For example, a starting time domain position of the PTW and a length of the PTW in the eDRX parameter may be used together to determine a distribution position of the PTW in the time domain.

As shown in FIG. 1B, the eDRX cycle is represented by T_{eDRX, H}.

FIG. 1B shows a timing sequence diagram after the UE enables the eDRX function.

With reference to FIG. 1B, one PTW exists in one eDRX cycle, and the PTW includes one or more DRX cycles.

A duration of the DRX cycle is far less than a duration of the eDRX cycle. For example, when the eDRX cycle is greater than 10.24s, the eDRX cycle may include the PTW consisting of one or more DRX cycles, as shown in FIG. 1B.

FIG. 1C shows a schematic diagram of an interaction of the eDRX parameter related to the eDRX function between the UE and the core network.

The method of exchanging the eDRX parameter between the UE and the core network show in FIG. 1C may include the followings.

The radio access network (RAN) sends an indication of an allowed eDRX function, a cell-specific indication (e.g., cell-specific DRX) and a hyper system frame number (SFN) to the UE via a system information block (SIB).

The UE sends a UE-specific DRX parameter and/or a preferable eDRX parameter in an attach request or a tracking area update (TAU) request.

The core network (CN) sends the eDRX configuration to the UE after receiving the attach request or the TAU request. The eDRX configuration carries the aforementioned one or more idle mode eDRX parameters. For example, a mobile management entity (MME) or an access and mobility management function of the CN may send the idle mode eDRX configuration to the UE after receiving the attach request or the TAU request.

The CN performs CN paging according to the eDRX configuration.

The RAN forwards the CN paging to the UE after receiving the CN paging sent by the MME.

The eDRX parameter is transparently transmitted or forwarded to the UE via the CN. For example the MME or the AMF of the CN sends the eDRX parameter of the eDRX function to the UE via the RAN.

RRC idle state, referred to as idle state, is a low power consumption state of UE known to the core network.

RRC inactive state, referred to as inactive state, is a low power consumption state of UE, that transparent to the core network, but visible to the access network.

The eDRX parameters may be configured separately for the idle state and the inactive state.

For example, the eDRX parameter in the idle state may be referred to as idle mode eDRX parameter or extended DRX parameter for CN paging or eDRX parameter configured by upper layer.

The eDRX parameter in the inactive state may be referred to as inactive mode eDRX parameter or extended DRX parameter for RAN paging or eDRX parameter configured by RAN.

For the inactive mode eDRX function, the RAN determines and configures the eDRX parameter through an RRC message.

The duration (also called window length) of the inactive mode PTW may be configured by the RAN, and the PTW may be called RAN PTW or PTW for RAN paging. The length of the RAN PTW may be different from the length of the CN PTW. The CN PTW may be a PTW for CN paging. When the RAN paging and the CN paging happen to be in the same superframe, the time domain starting positions of the RAN PTW and the CN PTW are the same.

However, whether the UE supports the idle mode eDRX function and/or the inactive mode eDRX function is related to the UE's capabilities. In this way, the UE may need to report information related to its own capabilities to inform the network device whether it supports the idle mode eDRX function, the inactive mode eDRX function, and/or supports an inactive mode eDRX cycle less than or equal to a pre-defined value, and/or supports an inactive mode eDRX cycle greater than a pre-defined value.

Relevant terms will be described below.

The inactive mode eDRX parameter may be used to configure a relevant parameter used by the inactive mode eDRX function, for example, the inactive mode eDRX cycle and/or the PTW within the inactive mode eDRX cycle.

The inactive mode eDRX cycle may be divided into different value ranges. The value range includes a first range and a second range. The first range is greater than 10.24. The second range may be less than or equal to 10.24s.

The inactive mode eDRX cycle in the first range is a first eDRX cycle in the inactive state.

The inactive mode eDRX cycle in the second range is a second eDRX cycle in the inactive state.

Both the first eDRX cycle and the second eDRX cycle are inactive mode eDRX cycles.

The idle mode eDRX parameter may be used to configure a relevant parameter used by the idle mode eDRX function, for example, the idle mode eDRX cycle and/or the PTW within the idle mode eDRX cycle.

First indication information is used to determine whether the UE supports a first eDRX cycle in an inactive state (also called inactive mode first eDRX cycle), and a duration of the first eDRX cycle is greater than a pre-defined value. The first indication information may also be referred to as the indication information of a first capability, or a first capability indication. The first capability here may be the capability of whether the UE supports the first eDRX cycle in the inactive state, in which the duration of the first eDRX cycle is greater than the pre-defined value, as mentioned above. As an embodiment, the first capability indication may be understood as a switch. For example, the first capability indication may be carried by an information element "extended DRX-Cycle Inactive-longer than 10.24". For example, the first indication information may directly or indirectly indicate whether the UE supports the first eDRX cycle in the inactive state. For example, the first indication information may explicitly indicate one or more bits for directly indicating whether the UE supports the first eDRX cycle in the inactive state, or the UE indirectly indicates whether the UE supports the first eDRX cycle in the inactive state on basis of whether the first indication information is sent; or the first indication information also indicates a correspondence between other content and whether the UE supports the first eDRX cycle in the inactive state, for indirectly indicating whether the UE supports the first eDRX cycle in the inactive state.

Second capability refers to the capability to support the eDRX function in the idle state (also called idle mode eDRX function). In some cases, the UE does not need to report to the network device whether it supports the second capability.

Second indication information is used to determine whether the UE supports a second eDRX cycle in an inactive state (also called inactive mode second eDRX cycle), and a duration of the second eDRX cycle is equal to or less than the pre-defined value. The second indication information may also be referred to as indication information of a third capability, or a third capability indication. The third capability here may be the capability of whether the UE supports the second eDRX cycle in the inactive state, in which the duration of the second eDRX cycle is equal to or less than the pre-defined value, as mentioned above. As an embodiment, the third capability indication may be understood as a switch. For example, the first capability indication may be carried in an information element "extended DRX-Cycle Inactive-less than or equal to 10.24 (extendedDRX-CycleInactive-r17)".

For example, the first indication information and the second indication information may be included in the same information carrier for transmission, or may be included in the same or different information carriers for transmission. The information carrier includes, but is not limited to, at least one of the following: a message, an information element (IE), a container or a field. A message related to handover of the UE from a first base station to a second base station may include: any message related to the handover of the UE from the first base station to the second base station. For example, the message related to the handover of the UE from the first base station to the second base station may include: a handover preparation message and/or a handover message. For example, the message related to the handover of the UE from the first base station to the second base station may include, but is not limited to, a handover request message. The handover request message is a message sent by the first base station to the second base station, indicating that the UE requests handover to the second base station.

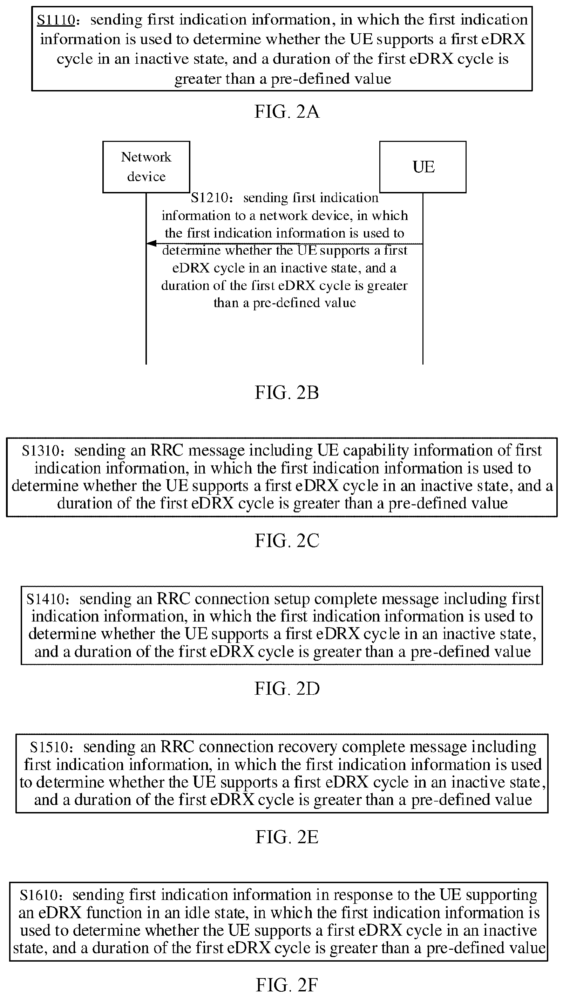

As shown in FIG. 2A, an embodiment of the present disclosure provides an information processing method, performed by a UE. The method includes the following step.

S 1110, first indication information is sent, in which the first indication information is used to determine whether the UE supports a first eDRX cycle in an inactive state, and a duration of the first eDRX cycle is greater than a pre-defined value.

The UE may be any UE supporting an eDRX function, and may be the UE shown in FIG. 1A, for example. The UE may also be referred to as a UE. For example, the UE may be any mobile phone, tablet computer or wearable device, smart home device, smart office device, vehicle-mounted device or industrial device, etc. For another example, the UE may be a reduced capability (RedCap) UE, etc.

For example, when the UE supports the eDRX function in the inactive state (also called inactive mode eDRX function), the UE may send the first indication information to inform a receiving end of the first indication information to determine whether the UE supports an eDRX cycle greater than a pre-defined value in the inactive state.

For example, the pre-defined value may be 10.24s, etc. In general, the eDRX cycle may be 2n-th power of 0.32s, where n is a natural number. In this way, if the first eDRX cycle supported by the UE is greater than 10.24s, then the first eDRX cycle supported by the UE is equal to or greater than 20.48s.

If the first eDRX cycle is greater than the pre-defined value, it means that the PTW may be set within the first eDRX cycle.

Different types of terminals may support the first eDRX cycle greater than the pre-defined value or may not support the first eDRX cycle greater than the pre-defined value due to different software and hardware capabilities, or different capability configurations, or different subscription services for the different types of terminals.

In this way, by reporting the first indication information, the capability of whether the UE supports the eDRX cycle greater than the pre-defined value in the inactive state may be informed to the peer device. When the peer device is a network device, the network device may configure the eDRX parameter in the inactive state for the UE according to the first indication information, to enable the configured eDRX parameter to conform to the UE's capability and meet the UE's requirements for a data transmission latency and low power consumption.

As shown in FIG. 2B, an embodiment of the present disclosure provides an information processing method, performed by a UE. The method includes the following step.

S1210, first indication information is sent to a network device, in which the first indication information is used to determine whether the UE supports a first eDRX cycle in an inactive state, and a duration of the first eDRX cycle is greater than a pre-defined value.

For example, the network device may be the base station and/or the core network device shown in FIG. 1A. The network device may be a first base station, and the first base station may be a serving base station or an anchor base station of the UE. For example, if the UE is in a connected state, the first base station may be the serving base station of the UE. If the UE is in a non-connected state, that is, the UE is in an idle state and/or an inactive state, the first base station may be the anchor base station of the UE. The anchor base station may be a previous serving base station of the UE. If the network device is a base station, the base station may configure the inactive mode eDRX parameter for the UE according to the first indication information. If the network device is a core network device, the core network device may configure the idle mode eDRX parameter for the UE according to the first indication information. If the network device is a core network device, the UE may send the first indication information to the core network device through a non-access stratum (NAS) message.

The inactive mode eDRX parameter may include at least: an inactive mode eDRX cycle and/or an inactive mode PTW in the inactive mode eDRX cycle. The idle mode eDRX parameter may include at least: an idle mode eDRX cycle and/or an idle mode PTW in the idle mode eDRX cycle.

In some embodiments, S1210 may include at least one of:
sending an RRC message including the first indication information to the network device, in which the RRC message may be an RRC message during a connection establishment, a connection reestablishment or a connection recovery process when the UE switches from a non-connected state to a connected state, or may be any RRC message when the UE is in a connected state;
sending MAC layer signaling to the network device, in which the MAC layer signaling may include MAC control element (CE) reporting, so that the UE may send the first indication information to the network device through the MAC layer signaling; or
reporting the first indication information through an uplink control information (UCI).

Of course, the above ways are merely examples of the UE sending the first indication information to a receiving end such as a network device, and the specific implementation is not limited to the above ways.

It should be understood that the embodiment shown in FIG. 2B may be implemented alone, or in combination with the embodiment shown in FIG. 2A.

As shown in FIG. 2C, an embodiment of the present disclosure provides an information processing method, performed by a UE. The method includes the following step.

S1310, an RRC message including UE capability information of first indication information is sent, in which the first indication information is used to determine whether the UE supports a first eDRX cycle in an inactive state, and a duration of the first eDRX cycle is greater than a pre-defined value.

The UE capability information may be an information element (IE) corresponding to "UE Capability infor". The UE capability information may further carry other capability information related to the UE capability, for example whether the UE supports monitoring of power saving signals, or whether the UE supports multiple DRX groups.

**In** this way, the first indication information related to whether the UE supports the inactive mode eDRX cycle greater than a pre-defined value is carried in the UE capability information for transmission, so that information related to the UE capability may be sent centrally to the receiving end, such as the network device, thus reducing the number of times the UE sends information.

For example, if the UE is in an RRC connected state, the UE may report the first indication information through the UE capability information. The RRC connected state herein is also referred to as the connected state for short.

Of course, the above content is only an example of the UE capability information. The UE capability information is carried in the RRC message and sent to the receiving end such as the network device.

It should be understood that the embodiment shown in FIG. 2C may be implemented alone, or in combination with the embodiment shown in FIG. 2A and/or the embodiment shown in FIG. 2B.

As shown in FIG. 2D, an embodiment of the present disclosure provides an information processing method, performed by a UE. The method includes the following step.

S1410, an RRC connection setup complete message including first indication information is sent, in which the first indication information is used to determine whether the UE supports a first eDRX cycle in an inactive state, and a duration of the first eDRX cycle is greater than a pre-defined value.

During a process of the UE switching from an idle state to a connected state, one or more RRC messages related to RRC connection establishment or re-establishment may be transmitted between the UE and a base station. The aforementioned first indication information may be sent in an RRC message exchanged between the UE and the base station during the process of the UE switching from the idle state to the connected state. For example, the first indication information may be carried in an RRC connection request message or an RRC connection setup complete message. If the first indication information is sent in an RRC connection setup complete message, it means that the UE and the base station have completed the connection establishment. The base station is used as a serving base station for the UE, and it is very likely to configure an inactive mode eDRX parameter for the UE; or the first indication information needs to be transmitted to the core network to facilitate the core network to configure the idle mode eDRX parameter for the UE.

In some embodiments, the UE is currently in the idle state, but needs to report the first indication information and does not want to enter the connected state. The UE may send the aforementioned first indication information through an RRC connection setup request message. After receiving an RRC connection setup response message returned by the network device, it may be assumed that the base station has successfully received the first indication information. Considering that the UE does not want to exit the idle state, the subsequent steps of the connection establishment may no longer executed continually, or the base station is informed that the UE desires to continue to maintain the idle state through a subsequent message of the connection setup response message. In this way, the UE may maintain the idle state with low power consumption.

The RRC connection setup complete message here is one type of the aforementioned RRC message, but the RRC message in the aforementioned embodiment is not limited to the RRC connection setup complete message.

If the first indication information is carried in the RRC connection setup complete message, the UE completes the connection recovery on one hand, and on the other hand, the UE informs the network side whether it supports the first eDRX cycle greater than the pre-defined value, thereby reducing information interaction between the UE and the network device such as a base station.

It should be understood that the embodiment shown in FIG. 2D may be implemented alone, or in combination with any of the embodiments shown in FIG. 2A-FIG. 2C.

As shown in FIG. 2E, an embodiment of the present disclosure provides an information processing method, performed by a UE. The method includes the following step.

S1510, an RRC connection recovery complete message including first indication information is sent, in which the first indication information is used to determine whether the UE supports a first eDRX cycle in an inactive state, and a duration of the first eDRX cycle is greater than a pre-defined value.

If the UE is in an inactive state, the UE may switch from the inactive state to a connected state by sending an RRC connection recovery request message, for example.

If the first indication information is carried in the RRC connection recovery complete message, the UE completes the connection recovery on the one hand, and on the other hand, it informs the network side whether it supports the first eDRX cycle greater than the pre-defined value, thereby reducing the information interaction between the UE and network devices such as base stations.

Further, the UE may also send the first indication information using an RRC connection recovery request message. For example, if the UE wants to continue to maintain the inactive state to save power consumption, and at the same time the UE needs to report the first indication information, the first indication information may be reported through the RRC connection recovery request message. In this way, after receiving an RRC connection recovery response message returned by the network device based on the RRC connection recovery request message, it can be considered that the network device has successfully received the first indication information, and the UE may continue to maintain the inactive state with low power consumption by terminating further interaction with the base station regarding the RRC connection recovery message, or notifying the base station or other network devices in a next related message that the UE wishes to maintain the inactive state.

It should be understood that the embodiment shown in FIG. 2E may be implemented alone, or in combination with any of the embodiments shown in FIG. 2A-FIG. 2D.

As shown in FIG. 2F, an embodiment of the present disclosure provides an information processing method, performed by a UE. The method includes the following step.

S1610, first indication information is sent in response to the UE supporting an eDRX function in an idle state, in which the first indication information is used to determine whether the UE supports a first eDRX cycle in an inactive state, and a duration of the first eDRX cycle is greater than a pre-defined value.

It can be understood that, in the embodiments of the present disclosure, the UE supporting the idle mode eDRX cycle is a prerequisite for sending the first indication information. In some embodiments, if the UE supports the idle mode eDRX cycle, the network device may configure an idle mode eDRX parameter for the UE, so that, by sending the first indication information, it is convenient for the network device or other receiving ends to perform configuration of the idle mode eDRX parameter according to the first indication information. In this way, by sending the first indication information, it is convenient for the network device or other receiving ends to perform configuration of the idle mode eDRX parameter according to the first indication information.

In other embodiments, if the UE supports the idle mode eDRX function, the network device may configure the idle mode eDRX parameter for the UE. The network device may assume that the UE supports the inactive mode eDRX function. The network device may configure the inactive mode eDRX parameter for the UE. In this way, the first indication information is sent to the network device or other receiving ends, so that the network device may configure the inactive mode eDRX parameter according to the first indication information.

In some other embodiments, if the UE sends the first indication information in case of supporting the idle mode function, the base station or other network devices will assume that the UE supports the idle mode eDRX function after receiving the first indication information, and whether the inactive mode first eDRX cycle is supported may be determined based on the information content of the first indication information. In this way, whether the first indication information is sent is equivalent to implicitly indicating whether the UE supports the idle mode eDRX function, that is, whether the UE supports the idle mode eDRX function and the inactive mode first eDRX function may be simultaneously indicated on basis of whether to send the first indication information or not, thereby reducing the information generation of the UE and saving signaling overhead.

Of course, the above content is only an example of sending the first indication information when the UE supports the idle mode eDRX function, and the specific implementation is not limited to the above content.

As a further improvement of this embodiment, in response to the UE supporting the idle mode eDRX function, sending the first indication information includes:
in response to the UE supporting the eDRX function in the idle state and supporting the first eDRX cycle in the inactive state, sending the first indication information, in which the first indication information is used to determine whether the UE supports the first eDRX cycle in the inactive state, and a duration of the first eDRX cycle is greater than a pre-defined value.

In some embodiments, the information processing method further includes:
in response to the UE supporting the eDRX function in the idle state but not supporting the eDRX function in the inactive state, not sending the first indication information.

In some embodiments, the information processing method further includes:
in response to the UE supporting the eDRX function in the idle state but not supporting a second eDRX cycle in the inactive state, not sending the first indication information.

In some embodiments, the information processing method further includes:
in response to the UE supporting the eDRX function in the idle state but not supporting the eDRX function in the inactive state, not sending the first indication information; and in response to the UE supporting the eDRX function in the idle state but not supporting the second eDRX cycle in the inactive state, not sending the first indication information.

If the UE supports the eDRX function in the idle state, it may not support or support the eDRX function in the inactive state. If the eDRX function in the inactive state is not supported, it is unnecessary to send the first indication information. However, due to the correlation and/or service relevance between the first eDRX cycle and the second eDRX cycle on the UE capability requirements, when the UE supports the second eDRX cycle, the network device assumes that the UE must support the eDRX function in the inactive state, and sends the first indication information in this case, so that the network device may further determine whether the UE supports the first eDRX cycle.

It should be understood that the embodiment shown in FIG. 2F may be implemented alone, or in combination with any of the embodiments shown in FIG. 2A-FIG. 2D.

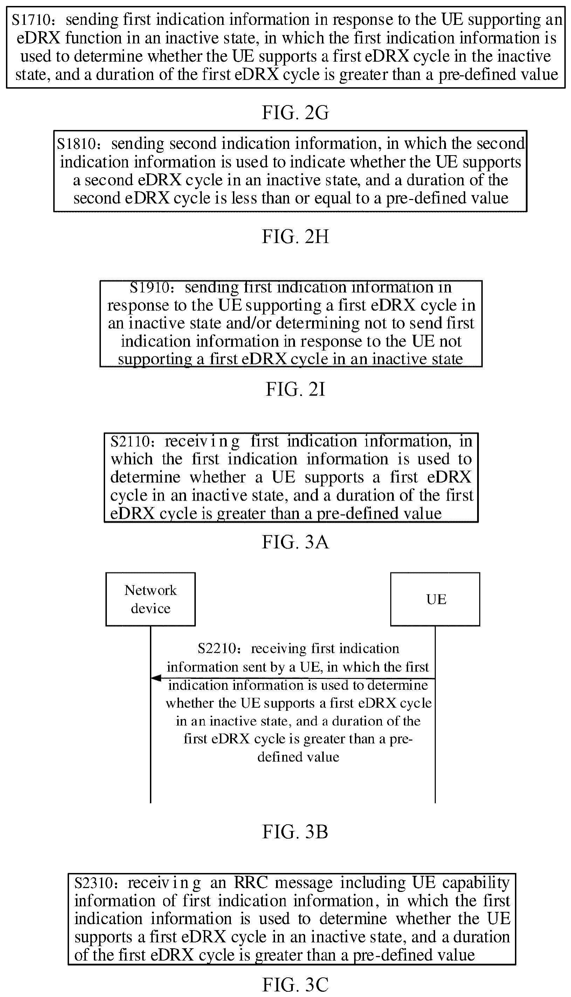

As shown in FIG. 2G, an embodiment of the present disclosure provides an information processing method, performed by a UE. The method includes the following step.

S1710, first indication information is sent in response to the UE supporting an eDRX function in an inactive state, in which the first indication information is used to determine whether the UE supports a first eDRX cycle in the inactive state, and a duration of the first eDRX cycle is greater than a pre-defined value.

Since the terminal supports the eDRX function in the inactive state, the network device or other receiving ends may configure the inactive mode eDRX parameter for the UE. In this way, by reporting the first indication information, it is convenient for the network device or other receiving ends to configure the inactive mode eDRX parameter supported by the UE.

For example, S1710 may include:
in response to the UE supporting a second eDRX cycle in the inactive state, sending the first indication information, in which a duration of the second eDRX cycle is less than or equal to the pre-defined value.

When the UE supports the eDRX function in the inactive state, the UE may only support the second eDRX cycle in the inactive state, and may or may not support the first eDRX cycle in the inactive state. In this case, by sending the first indication information, the network device or other receiving ends may configure the inactive mode eDRX parameter for the UE. In this way, by reporting the first indication information, it is convenient for the network device or other receiving ends to configure the inactive mode eDRX parameter supported by the UE.

For example, in some cases, if the UE supports the first eDRX cycle, it may be assumed that the UE supports the second eDRX cycle. By sending the first indication information, if the first indication information indicates that the UE supports the first eDRX cycle, the receiving end such as the network device may assume that the UE supports the first eDRX cycle and supports the second eDRX cycle at the same time.

For another example, in the related art, the UE may notify whether the UE itself supports the second eDRX cycle through one or more messages. However, considering the difference between the UE capability required to support the first eDRX cycle and the UE capability required to support the second eDRX cycle, or considering that a higher UE capability is required to support the first eDRX cycle, after the receiving end such as the network device receives the information indicating that the UE supports the second eDRX cycle, the receiving end is still unclear whether the UE supports the first eDRX cycle.

In some cases, if the UE does not support the second eDRX cycle, the receiving end such as the network device may receive a corresponding notification. In this case, considering the correlation between the UE capability requirements for the first eDRX cycle and the second eDRX cycle and/or the correlation between the UE subscription services for the first eDRX cycle and the second eDRX cycle, the network device may assume that the UE does not support the first eDRX cycle. If the UE supports the second eDRX cycle, it is not necessary to send the aforementioned first indication information, thereby avoiding unnecessary sending of the first indication information and saving signaling overhead.

In some cases, it is also taken into consideration that there is no specific information to inform the receiving end such as the network device that the UE supports the eDRX function in the inactive state. However, since there is specific information to inform the receiving end such as the network device that the terminal supports the second eDRX cycle in the inactive state, in this way, the first indication information may be sent when the terminal supports the second eDRX cycle in the inactive state, thereby reducing unnecessary information sending.

In an embodiment, considering that in the embodiments of the present disclosure, the first indication information is sent when the terminal supports the second eDRX cycle in the inactive state, in this way, when the receiving end such as a network device receives the first indication information, regardless of whether the first indication information indicates that the UE supports the first eDRX cycle, it can be assumed that the UE supports the second eDRX cycle in the inactive state, so the indication information indicating whether the UE supports the second eDRX cycle in the inactive state does not need to be sent. In this case, the base station may allocate the first eDRX cycle and/or the second eDRX cycle to the UE according to actual needs.

It should be understood that the embodiment shown in FIG. 2G may be implemented alone, or in combination with any of the embodiments shown in FIG. 2A-FIG. 2F.

As shown in FIG. 2H, an embodiment of the present disclosure provides an information processing method, performed by a UE. The method includes the following step.

S1810, second indication information is sent, in which the second indication information is used to indicate whether the UE supports a second eDRX cycle in an inactive state, and a duration of the second eDRX cycle is less than or equal to a pre-defined value.

As an embodiment, the UE may report the first indication information to indicate whether the UE supports the first eDRX cycle; however, because supporting the first eDRX cycle does not necessarily mean supporting the second eDRX cycle; in this case, separate second indication information is required to indicate whether the UE supports the second eDRX cycle in the inactive state; the duration of the second eDRX cycle is less than or equal to the pre-defined value.

The information processing method of this embodiment may be executed alone or in combination with the above-mentioned embodiments. In short, the second indication information is indication information indicating whether the UE supports the second eDRX cycle in the inactive state, and the indication information may be carried in various RRC messages, MAC layer signaling and/or UCI. Of course, the above content is only an example, and the specific implementation is not limited to the above example.

For example, in some embodiments, the UE may send the aforementioned first indication information when the second indication information indicates that the UE supports the second eDRX cycle in the inactive state.

It should be understood that the embodiment shown in FIG. 2H may be implemented alone, or in combination with any of the embodiments shown in FIG. 2A-FIG. 2G.

As shown in FIG. 2I, an embodiment of the present disclosure provides an information processing method, performed by a UE. The method includes the following step.

S1910, first indication information is sent in response to the UE supporting a first eDRX cycle in an inactive state and/or it is determined that first indication information is not sent in response to the UE not supporting a first eDRX cycle in an inactive state.

In some embodiments, an embodiment of the present disclosure provides an information processing method performed by the UE, including:
sending first indication information in response to the UE supporting a first eDRX cycle in an inactive state.

In some embodiments, an embodiment of the present disclosure provides an information processing method performed by the UE, including:
determining not to send first indication information in response to the UE not supporting a first eDRX cycle in an inactive state.

In some embodiments, an embodiment of the present disclosure provides an information processing method performed by the UE, including:
determining not to send first indication information in response to the UE not supporting a first eDRX cycle in an inactive state, and sending the first indication information in response to the UE supporting the first eDRX cycle in the inactive state. In these embodiments, the first indication information specifically indicates that the UE supports the first eDRX cycle, so that the receiving end such as a network device may be informed of the capability of whether the UE supports the first eDRX cycle on basis of whether the first indication information is sent. In this way, when the receiving end such as the network device does not receive the first indication information, it can be assumed that the UE does not support the first eDRX cycle. By using this reporting method, the reporting of the first indication information when the UE does not support the first eDRX cycle can be reduced, thereby saving unnecessary signaling overhead.

It should be understood that the embodiment shown in FIG. 2I may be implemented alone, or in combination with any of the embodiments shown in FIG. 2A-FIG. 2H.

As shown in FIG. 3A, an embodiment of the present disclosure provides an information processing method, performed by a first base station. The method includes the following step.

S2110, first indication information is received, in which the first indication information is used to determine whether a UE supports a first eDRX cycle in an inactive state, and a duration of the first eDRX cycle is greater than a pre-defined value.

The first connection station may be a serving base station or an anchor base station of the UE. For example, if the UE is currently in a non-connected state, the anchor base station may be the last serving base station before the UE enters the non-connected state.

After receiving the first indication information, the first base station may clearly know whether the UE supports the first eDRX cycle in the inactive state. The UE may subsequently configure the inactive mode eDRX parameter for the UE based on the first indication information, so as to configure the eDRX parameter supported by the UE.

Of course, in some embodiments, the first indication information may be received directly from the UE, or may be received from a relay node of the UE.

For example, as shown in FIG. 3B, the information processing method may include the following step.

S2210, first indication information sent by a UE is received, in which the first indication information is used to determine whether the UE supports a first eDRX cycle in an inactive state, and a duration of the first eDRX cycle is greater than a pre-defined value.

In some embodiments, if the UE indicates whether the UE supports the first eDRX cycle in the inactive state on basis of whether to send the first indication information, the UE may consider that the UE supports the first eDRX cycle in the inactive state when receiving the first indication information, and the UE may consider that the UE does not support the first eDRX cycle in the inactive state when not receiving the first indication information.

In some other embodiments, the UE indicates whether the UE supports the first eDRX cycle in the inactive state based on the information content of the first indication information. In this case, after receiving the first indication information, the first base station needs to determine whether the UE supports the first eDRX cycle in the inactive state based on the information content of the first indication information, and the duration of the first eDRX cycle is greater than the pre-defined value.

It should be understood that the embodiment shown in FIG. 3B may be implemented alone, or in combination with any embodiment shown in FIG. 3A.

As shown in FIG. 3C, an embodiment of the present disclosure provides an information processing method, performed by a first base station. The method includes the following step.

S2310, an RRC message including UE capability information of first indication information is received, in which the first indication information is used to determine whether the UE supports a first eDRX cycle in an inactive state, and a duration of the first eDRX cycle is greater than a pre-defined value.

The UE capability information may be an information element (IE) corresponding to "UE Capability infor". The UE capability information may further carry other capability information related to the UE capability, for example whether the UE supports monitoring of power saving signals, or whether the UE supports multiple DRX groups.

In this way, the first indication information related to whether the UE supports the inactive mode eDRX cycle greater than a pre-defined value is carried in the UE capability information for transmission, so that the first base station may receive information related to the UE capability may be sent centrally, thus reducing unnecessary information receiving.

For example, the aforementioned RRC message including the UE capability information from the UE in an RRC connected state is received.

Of course, the above content is only an example of the UE capability information. The UE capability information is carried in the RRC message and sent to the receiving end such as the network device.

It should be understood that the embodiment shown in FIG. 3C may be implemented alone, or in combination with the embodiment shown in FIG. 3A and/or the embodiment shown in FIG. 3B.

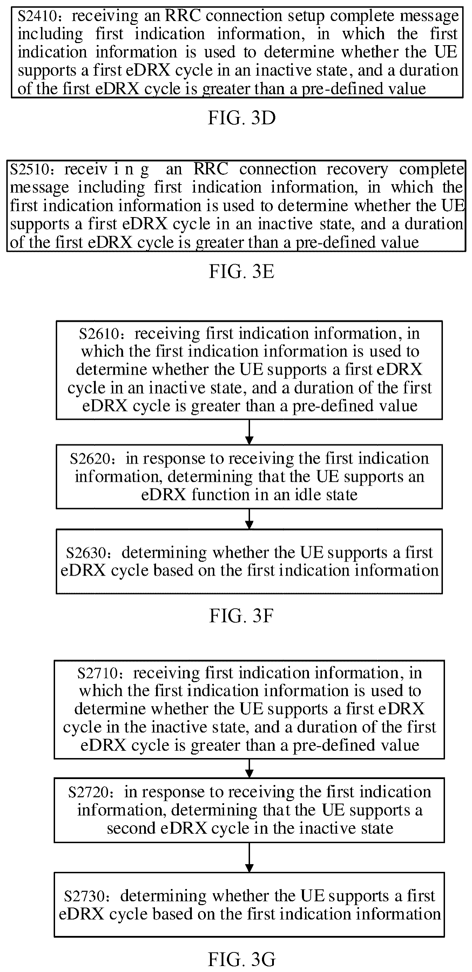

As shown in FIG. 3D, an embodiment of the present disclosure provides an information processing method, performed by a first base station. The method includes the following step.

S2410, an RRC connection setup complete message including first indication information is received, in which the first indication information is used to determine whether the UE supports a first eDRX cycle in an inactive state, and a duration of the first eDRX cycle is greater than a pre-defined value.

During a process of the UE switching from an idle state to a connected state, one or more RRC messages related to RRC connection establishment or re-establishment may be transmitted between the UE and the first base station. The aforementioned first indication information may be sent in an RRC message exchanged between the UE and the first base station during the process of the UE switching from the idle state to the connected state. For example, the first indication information may be carried in an RRC connection request message or an RRC connection setup complete message. If the first indication information is sent in an RRC connection setup complete message, it means that the UE and the first base station have completed the connection establishment. The first base station is very likely to configure an inactive mode eDRX parameter for the UE; or the first base station needs to transmit the first indication information to the core network to facilitate the core network to configure the idle mode eDRX parameter for the UE.

If the first indication information is carried in the RRC connection setup complete message, the UE completes the connection recovery on one hand, and on the other hand, the UE informs the network side whether it supports the first eDRX cycle greater than the pre-defined value, thereby reducing information interaction between the UE and the network device such as a base station.

It should be understood that the embodiment shown in FIG. 3D may be implemented alone, or in combination with any of the embodiments shown in FIG. 3A-FIG. 3C.

As shown in FIG. 3E, an embodiment of the present disclosure provides an information processing method, performed by a first base station. The method includes the following step.

S2510, an RRC connection recovery complete message including first indication information is received, in which the first indication information is used to determine whether the UE supports a first eDRX cycle in an inactive state, and a duration of the first eDRX cycle is greater than a pre-defined value.

If the UE is in an inactive state, the UE may switch from the inactive state to a connected state by sending an RRC connection recovery request message, for example.

If the first indication information is carried in the RRC connection recovery complete message, the UE completes the connection recovery on the one hand, and on the other hand, it informs the network side whether it supports the first eDRX cycle greater than the pre-defined value, thereby reducing the information interaction between the UE and network devices such as base stations.

Further, the UE may also send the first indication information using an RRC connection recovery request message. For example, if the UE wants to continue to maintain the inactive state to save power consumption, and at the same time the UE needs to report the first indication information, the first indication information may be sent to the base station through the RRC connection recovery request message. In this way, the first base station may receive the RRC connection recovery request message including the aforementioned first indication information.

It should be understood that the embodiment shown in FIG. 3E may be implemented alone, or in combination with any of the embodiments shown in FIG. 3A-FIG. 3D.

As shown in FIG. 3F, an embodiment of the present disclosure provides an information processing method, performed by a first base station. The method includes the following step.

S2610, first indication information is received, in which the first indication information is used to determine whether the UE supports a first eDRX cycle in an inactive state, and a duration of the first eDRX cycle is greater than a pre-defined value.

S2620, in response to receiving the first indication information, it is determined that the UE supports an eDRX function in an idle state.

S2630, it is determined whether the UE supports a first eDRX cycle based on the first indication information.

The order of S2620 and S2630 is not certain. In some embodiments, the information processing method may include S2610, S2620, and S2630 executed sequentially. In other embodiments, the information processing method may include S2610, S2630, and S2620 in sequence. In still other embodiments, the information processing method may include S2610, and S2620 and S2630 executed simultaneously.

Since the first indication information is sent when the UE supports the eDRX function in the idle state, the first base station may determine whether the UE supports the eDRX function in the idle state based on whether the first indication information is received, and determine whether the UE supports the first eDRX cycle greater than the pre-defined value in the inactive state based on information content of the first indication information, thereby realizing the dual function indication of the UE by means of one piece of information and saving signaling overhead.

In other embodiments, whether the UE supports the eDRX function in the idle state may be determined based on other information of the UE, or it may be determined based on a protocol agreement that this type of UEs supports the eDRX function in the idle state. In this case, it is equivalent to that the first base station already knows that the UE supports the eDRX function in the idle state. When configuring the eDRX parameter in the idle state, better configuration may be achieved by referring to the first indication information. Therefore, the UE only sends the first indication information when it supports the eDRX function in the idle state, which can reduce unnecessary information sending.

As shown in FIG. 3G, an embodiment of the present disclosure provides an information processing method, performed by a first base station. The method includes the following step.

S2710, first indication information is received, in which the first indication information is used to determine whether the UE supports a first eDRX cycle in the inactive state, and a duration of the first eDRX cycle is greater than a pre-defined value.

S2720, in response to receiving the first indication information, it is determined that the UE supports a second eDRX cycle in the inactive state.

S2730, it is determined whether the UE supports a first eDRX cycle based on the first indication information.

Since the first indication information is sent under the premise that the UE supports the second eDRX cycle in the inactive state, the first base station may determine whether the UE supports the second eDRX cycle in the inactive state based on whether the first indication information is received, and determine whether the UE supports the first eDRX cycle greater than the pre-defined value in the inactive state based on information content of the first indication information, thereby realizing the dual function indication of the UE by means of one piece of information and saving signaling overhead.

In some other embodiments, whether the UE supports the second eDRX cycle in the inactive state may be determined based on other information of the UE, or it may be determined based on a protocol agreement that all UEs of this type support the second eDRX cycle in the inactive state. In this case, it is equivalent to that the first base station already knows that the UE supports the second eDRX cycle in the inactive state. When configuring the eDRX parameter in the idle state, better configuration may be achieved by referring to the first indication information. Therefore, the UE only sends the first indication information when it supports the second eDRX cycle in the inactive state, which can reduce unnecessary information sending.

It may be understood that the order of S2720 and S2730 is not certain. In some embodiments, the information processing method may include S2710, S2720, and S2730 executed sequentially. In other embodiments, the information processing method may include S2710, S2730, and S2720 in sequence. In still other embodiments, the information processing method may include S2710, and S2720 and S2730 executed simultaneously.

It should be understood that the embodiment shown in FIG. 3G may be implemented alone, or in combination with any of the embodiments shown in FIG. 3A-FIG. 3E.

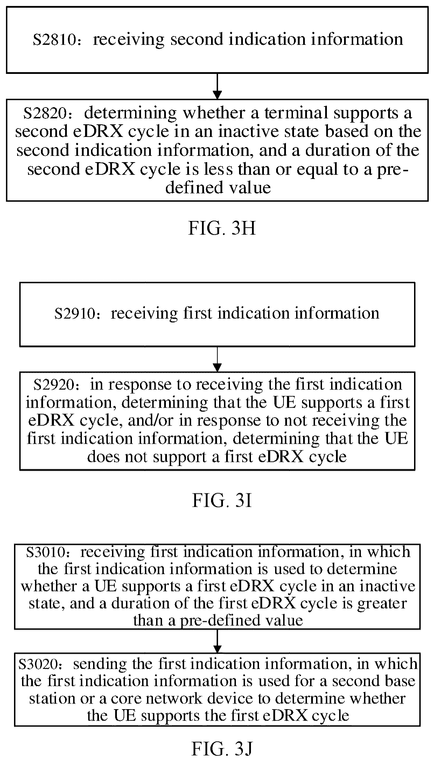

As shown in FIG. 3H, an embodiment of the present disclosure provides an information processing method, performed by a first base station. The method includes the following step.

S2810, second indication information is received.

S2820, it is determined whether a terminal supports a second eDRX cycle in an inactive state based on the second indication information, and a duration of the second eDRX cycle is less than or equal to a pre-defined value.

The information processing method of this embodiment may be executed alone or in combination with the above-mentioned embodiments. In short, the second indication information is indication information indicating whether the UE supports the second eDRX cycle in the inactive state, and the indication information may be carried in various RRC messages, MAC layer signaling and/or UCI. Of course, the above content is only an example, and the specific implementation is not limited to the above example.

For example, in some embodiments, the first indication information and the second indication information may be received respectively, it is determined whether the UE supports a first eDRX cycle in an inactive state according to the first indication information, and it is determined whether the UE supports a second eDRX cycle in an inactive state according to the second indication information.

In some embodiments, the first indication information is received when the second indication information indicates that the UE supports the second eDRX cycle in the inactive state. This may also reduce the sending of the first indication information when the UE does not support the second eDRX cycle in the inactive state, thereby reducing unnecessary receiving of the first indication information and signaling overhead.

It should be understood that the embodiment shown in FIG. 3H may be implemented alone, or in combination with any of the embodiments shown in FIG. 3A-FIG. 3G.

As shown in FIG. 3I, an embodiment of the present disclosure provides an information processing method, performed by a first base station. The method includes the following step.

S2910, first indication information is received.

S2920, in response to receiving the first indication information, it is determined that the UE supports a first eDRX cycle, and/or in response to not receiving the first indication information, it is determined that the UE does not support a first eDRX cycle.

In some embodiments, an embodiment of the present disclosure provides an information processing method performed by the first base station, including:
receiving first indication information; and
in response to receiving the first indication information, determining that the UE supports a first eDRX cycle.

In some embodiments, an embodiment of the present disclosure provides an information processing method performed by the first base station, including:
receiving first indication information; and
in response to not receiving the first indication information, determining that the UE does not support a first eDRX cycle.

In some embodiments, an embodiment of the present disclosure provides an information processing method performed by the first base station, including:
receiving first indication information; and
in response to not receiving the first indication information, determining that the UE does not support a first eDRX cycle, and in response to receiving the first indication information, determining that the UE supports the first eDRX cycle.

In these embodiments, it is equivalent to that the first indication information specifically indicates that the UE supports the first eDRX cycle in the inactive state. In this way, whether the UE supports the first eDRX cycle in the inactive state may be determined on basis of whether the first indication information is received. Since the UE may not send the first indication information when it does not support the first eDRX cycle in the inactive state, unnecessary signaling overhead can be reduced.

It should be understood that the embodiment shown in FIG. 3I may be implemented alone, or in combination with any of the embodiments shown in FIG. 3A-FIG. 3G.

As shown in FIG. 3J, an embodiment of the present disclosure provides an information processing method, performed by a first base station. The method includes the following steps.

S3010, first indication information is received, in which the first indication information is used to determine whether a UE supports a first eDRX cycle in an inactive state, and a duration of the first eDRX cycle is greater than a pre-defined value.

S3020, the first indication information is sent, in which the first indication information is used for a second base station or a core network device to determine whether the UE supports the first eDRX cycle.

After receiving the first indication information, the first base station sends the first indication information to another device, for example, to the second base station or the core network device, the core network device may include an MME or an AMF, etc. In this way, if another device receives the first indication information, the another device may know whether the UE supports the first eDRX cycle in the inactive state.

It should be understood that the embodiment shown in FIG. 3J may be implemented alone, or in combination with any of the embodiments shown in FIG. 3A-FIG. 3I.

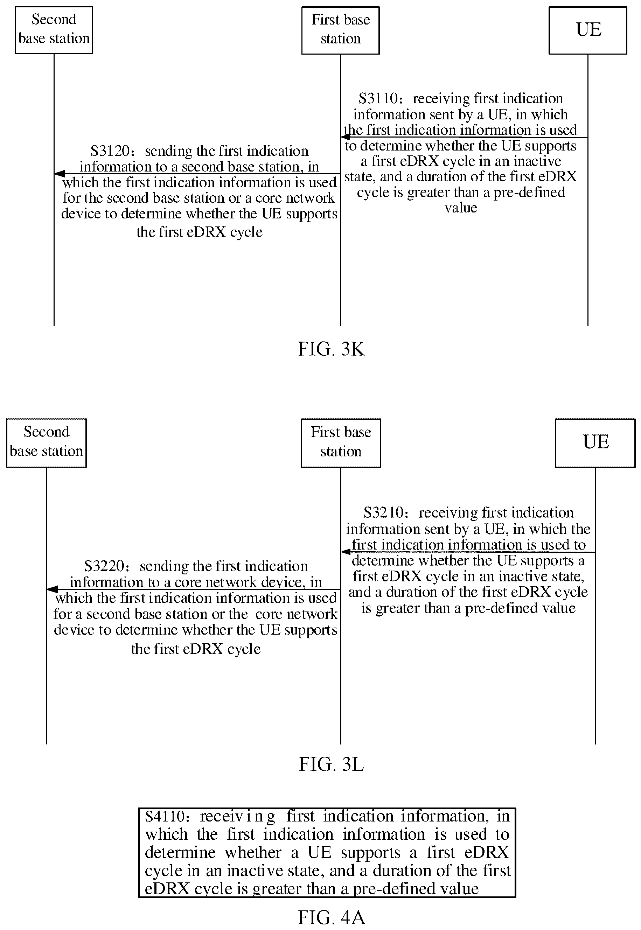

As shown in FIG. 3K, an embodiment of the present disclosure provides an information processing method, performed by a first base station. The method includes the following steps.

S3110, first indication information sent by a UE is received, in which the first indication information is used to determine whether the UE supports a first eDRX cycle in an inactive state, and a duration of the first eDRX cycle is greater than a pre-defined value.

S3120, the first indication information is sent to a second base station, in which the first indication information is used for the second base station or a core network device to determine whether the UE supports the first eDRX cycle.

The second base station may be a target base station to which the UE is handed over, or selected or reselected by the UE. The second base station may be another base station that assists the first base station to page the UE, such as another base station located within the same tracking area or notification area as the first base station.

For example, when the first indication information is sent to the second base station, sending the first indication information includes: sending a UE context response message including the first indication information; or sending a message related to handover of the UE from the first base station to the second base station, in which the message related to handover of the UE from the first base station to the second base station includes the first indication information.

That is, during a process that the UE hands over, selects or reselects from the first base station to the second base station, there may be one or more signalings to be transmitted between the first base station and the second base station. In the embodiments of the present disclosure, by sending the first indication information to the second base station through the UE context response message or a handover request message, no additional message is required to send the first indication information.

For example, if the first base station further receives second indication information from the UE, the first base station may carry the second indication information in the UE context response message or the message related to handover of the UE from the first base station to the second base station for transmission to the second base station.

It should be understood that the embodiment shown in FIG. 3K may be implemented alone, or in combination with any of the embodiments shown in FIG. 3A-FIG. 3J.

As shown in FIG. 3L, an embodiment of the present disclosure provides an information processing method, performed by a first base station. The method includes the following steps.

S3210, first indication information sent by a UE is received, in which the first indication information is used to determine whether the UE supports a first eDRX cycle in an inactive state, and a duration of the first eDRX cycle is greater than a pre-defined value.

S3220, the first indication information is sent to a core network device, in which the first indication information is used for a second base station or the core network device to determine whether the UE supports the first eDRX cycle.

For example, when the first indication information is sent to the core network device, sending the first indication information includes: sending an initial UE message including the first indication information.

The initial UE message may be a message sent by the UE to the core network device when the UE is initially registered to the network. By sending the first indication information and/or second indication information to the core network device through the initial UE message, the core network device may know earlier whether the UE supports the first eDRX cycle and/or a second eDRX cycle.

In some other embodiments, the first base station may use a tracking area update message or the like to send the first indication information to the core network device.

It should be understood that the embodiment shown in FIG. 3L may be implemented alone, or in combination with any of the embodiments shown in FIG. 3A-FIG. 3K.

As shown in FIG. 4A, an embodiment of the present disclosure provides an information processing method, performed by a second base station. The method includes the following step.

S4110, first indication information is received, in which the first indication information is used to determine whether a UE supports a first eDRX cycle in an inactive state, and a duration of the first eDRX cycle is greater than a pre-defined value.

The second connection station may be a serving base station or an anchor base station of the UE.

The second connection station may receive the first indication information from the UE or a first base station, etc.

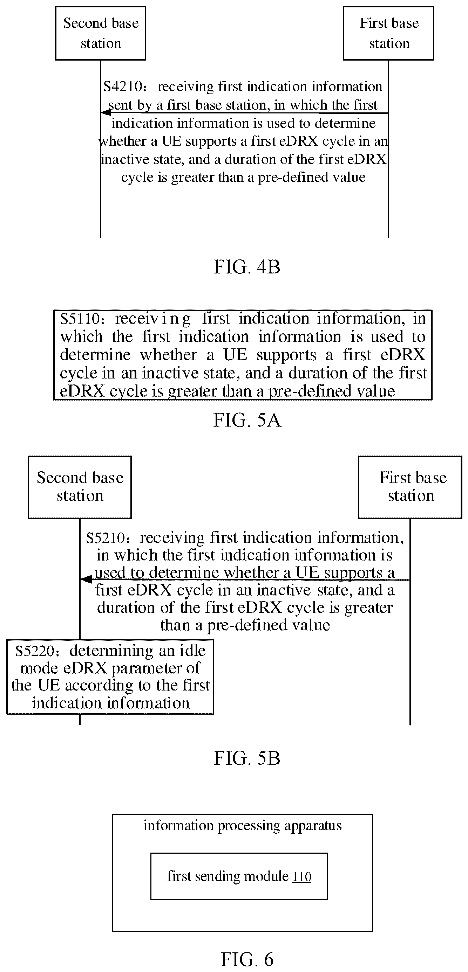

As shown in FIG. 4B, an embodiment of the present disclosure provides an information processing method, performed by a second base station. The method includes the following step.

S4210, first indication information sent by a first base station is received, in which the first indication information is used to determine whether a UE supports a first eDRX cycle in an inactive state, and a duration of the first eDRX cycle is greater than a pre-defined value.

For example, the first indication information is received from the first base station via an X2 interface or an Xn interface, or the first indication information is received via various wired links.

If the second base station is a target base station that the UE is handed over to or the UE selects or reselects, the second base station may receive the first indication information from the first base station, so that it is unnecessary for the second base station to receive it from the UE.

For example, the UE sends the first indication information to a base station on the network side during an initial registration phase or at an attachment node. After the UE subsequently completes registration and/or attachment, it may access different base stations due to its own movement. The interaction of the first indication information to the base stations may reduce the signaling overhead and the UE power consumption caused by the UE sending the first indication information to different base stations.

For example, receiving the first indication information includes:
receiving a UE context response message including the first indication information;
   or
receiving a message related to handover of the UE from the first base station to the second base station, in which the message related to the handover of the UE from the first base station to the second base station includes the first indication information. The message related to the handover of the UE from the first base station to the second base station may be any message related to the handover of the UE between the first base station and the second base station, for example, a handover preparation message, a message exchanged between the first base station and the second base station during a handover process. For example, the message related to the handover of the UE from the first base station to the second base station includes but is not limited to a handover request message.

Of course, the above content is an example of a message in which the second base station receives the first indication information, and the specific implementation is not limited to the above example.

It should be understood that the embodiment shown in FIG. 4B may be implemented alone, or in combination with any of the embodiment shown in FIG. 4A.

As shown in FIG. 5A, an embodiment of the present disclosure provides an information processing method, performed by a core network device. The method includes the following step.

S5110, first indication information is received, in which the first indication information is used to determine whether a UE supports a first eDRX cycle in an inactive state, and a duration of the first eDRX cycle is greater than a pre-defined value.

For example, the core network device may include various types of devices in the core network. For example, the core network device may include: an MME or an AMF.

The first indication information may be first indication information forwarded by the first base station or transparently transmitted from the UE. In this way, it is convenient for the core network device to determine configuration of an idle mode eDRX parameter or other related operations according to the first indication information.

In some embodiments, if the core network device needs to configure the idle mode eDRX parameter with reference to the first indication information, an upload indication may be sent to the first base station, and the first base station will return the aforementioned first indication information based on the upload indication. In this way, if the core network device does not need to configure the idle mode eDRX parameter with reference to the first indication information, it is unnecessary to send an upload indication to the first base station, and the first base station will not upload the first indication information in this case.

In other embodiments, regardless of whether the core network device needs the first indication information, the first base station may upload the first indication information of the UE to the core network device. In this case, the core network device may passively receive the first indication information.

As shown in FIG. 5B, an embodiment of the present disclosure provides an information processing method, performed by a core network device. The method includes the following steps.

S5210, first indication information is received, in which the first indication information is used to determine whether a UE supports a first eDRX cycle in an inactive state, and a duration of the first eDRX cycle is greater than a pre-defined value.

S5220, an idle mode eDRX parameter of the UE is determined according to the first indication information.

For example, if the first indication information indicates that the UE supports a first eDRX cycle in an inactive state, an eDRX cycle in an idle state greater than a pre-defined value may be preferentially configured for the UE.

For another example, if the first indication information indicates that the UE does not support the first eDRX cycle in the inactive state, priority may be given to configuring an eDRX cycle in the idle state that is not greater than a pre-defined value for the UE.

In the New Radio (NR), an inactive state of the UE is introduced. In this case, the UE needs to receive not only CN paging from the CN but also RAN paging from the RAN.

For the inactive state, the RAN determines and configures an eDRX parameter for the RRC inactive state through an RRC message. The RAN may use the eDRX parameter to allocate an inactive mode eDRX cycle that is shorter than an eDRX cycle configured by the CN to the UE.

For example, the core network allocates a first eDRX parameter to the UE, i.e., an idle mode eDRX parameter or an extended DRX parameter for CN paging or an eDRX parameter configured by an upper layer.

As another example, the base station allocates a second eDRX parameter to the UE, i.e., an inactive mode eDRX parameter, or an extended DRX parameter for RAN paging, or an eDRX parameter configured by RAN.

It should be understood that the embodiment shown in FIG. 5B may be implemented alone, or in combination with any of the embodiment shown in FIG. 5A.

If it is assumed that the capability of the UE to support an eDRX cycle more than 10.24s in an RRC non-connected state is regarded as the first capability, then for the UE, the capability of the UE to support the eDRX function in an idle state may be regarded as the second capability; and the capability of the UE to support an eDRX cycle less than or equal to 10.24s in an inactive state may be regarded as the third capability (for example, indicated by an information element (extendedDRX-CycleInactive-r17)).

The embodiments of the present disclosure provide an eDRX operation mode when a UE is in an inactive state. For example, the capability of the UE to support a second eDRX paging cycle exceeding a specific threshold (a first capability indication, supporting an eDRX cycle in an inactive state (also called inactive eDRX) more than 10.24s) is introduced.

As an embodiment, the specific threshold is 10.24s. The specific threshold is one of the aforementioned pre-defined values.

### Example 1:

Capability information of the first capability may be notified to the base station through reporting of UE capability information. The capability information of the first capability may be the aforementioned first indication information. The capability information of the first capability may also be referred to as the first capability indication.

As an embodiment, the network side may configure an eDRX cycle more than 10.24s according to implementation requirements if supporting of an eDRX cycle in an inactive state more than 10.24s is reported. If the UE does not report this capability, an eDRX cycle in an inactive state more than 10.24s cannot be configured.

### Example 2:

Capability information of the first capability may be notified to the base station through reporting of one or more messages. The message may be the aforementioned RRC connection setup complete message and/or the aforementioned RRC connection recovery complete message.

For example, the first capability indication is notified to the base station through the RRC connection setup complete message.

### Example 3:

The prerequisite for the UE to report the capability information of the first capability is that the UE supports the second capability, that is, the UE supports the eDRX function in the idle state.

The prerequisite for the UE to report the capability information of the first capability is that the UE supports the second capability, that is, the UE supports the eDRX cycle in the idle state, however, the UE does not necessarily support the inactive mode eDRX cycle not exceeding 10.24s, or the inactive mode eDRX cycle exceeding 10.24s. That is, if the terminal reports the first capability, it means that the terminal must support the second capability, but it does not mean that the terminal supports the third capability.

In this case, the network determines whether the terminal has the third capability based on reporting information with regard to the terminal's support for the third capability.

### Example 4:

The prerequisite for the UE to report the first capability indication is that the UE supports the capability information of the third capability. This means that since the UE has reported that it supports an eDRX cycle more than 10.24s, it must support an inactive mode eDRX cycle less than or equal to 10.24s. The capability information of the third capability may be the aforementioned second indication information. As an embodiment, the network may configure the low-end configuration for the reported configuration of supporting the inactive mode eDRX cycle more than 10.24s to be 10.24s, less than 10.24s, or more than 10.24s according to implementation requirements.

Example 5: The capability information of the first capability reported by the UE may be transmitted between base stations, for example, between the current serving base station and the next serving base station of the UE, or between the previous serving base station and the next serving base station of the UE.

Optionally, the capability information of the first capability is transferred from a source base station to a target base station during handover.

Optionally, for the UE in an inactive state, the capability information of the first capability may be obtained from a UE context acquisition response from an anchor base station to the current serving base station.

### Example 6:

The capability information of the first capability reported by the UE may be transmitted between the base station and the core network.

As an embodiment, the base station provides the capability information of the first capability to the core network in the initial UE message, for reference when the core network allocates the idle mode eDRX parameter.

### Example 8:

An information element (IE) (extendedDRX-CycleInactive-longerthan10.24-r17) is introduced, which is used to indicate whether the UE supports an eDRX cycle in an RRC inactive state longer than 1024 radio frames. When the UE supports an eDRX cycle in idle state, the IE indicates whether the UE supports an eDRX cycle in an RRC inactive state longer than 1024 radio frames (extendedDRX-CycleInactive-longerthan10.24-r17 Indicates whether UE supports the extended DRX in RRC_INACTIVE with values longer than 1024 radio frames as specified in TS 38.331. The UE may indicate support for extended DRX in RRC_INACTIVE with values longer than 1024 radio frames only if it supports extended DRX in RRC_IDLE). That is, the condition for the UE to support the inactive mode eDRX cycle longer than 1024 radio frames is that the UE supports the eDRX in idle state. The IE can also be understood as a flag or an indicator.

### Example 8:

An IE (extendedDRX-CycleInactive-longerthan10.24-r17) is introduced to indicate whether the UE supports an eDRX cycle in an RRC inactive state longer than 1024 radio frames. In the condition that the UE supports an eDRX cycle in an RRC inactive state less than or equal to 1024 radio frames, the IE may indicate whether the UE supports an eDRX cycle in an RRC inactive state longer than 1024 radio frames (extendedDRX-CycleInactive-longerthan10.24-r17indicates whether UE supports the extended DRX in RRC_INACTIVE with values longer than 1024 radio frames as specified in TS 38.331 [9]. The UE may indicate support for extended DRX in RRC_INACTIVE with values longer than 1024 radio frames only if it supports extended DRX in RRC_Inactive with values shorter than or equal to1024 radio frames). That is, the condition for the UE to support an inactive mode eDRX cycle more than 1024 radio frames is that the UE supports an inactive mode eDRX cycle less than or equal to 1024 radio frames. The IE can also be understood as a flag or an indicator.

In any of the foregoing embodiments, a duration of 1024 wireless frames is 10.24 seconds.

The embodiments of the present disclosure provide an information processing method, which may include:
the UE sending a first indication message to a first base station, in which the first indication message is used to determine whether the UE supports a first eDRX cycle in an inactive state, and a duration of the first eDRX cycle is greater than a pre-defined value; and the first base station receiving the first indication information.

In some embodiments, the method further includes:
after receiving the first indication information, the first base station sending the first indication information to the second base station. The first base station may be the source base station of the UE, and the second base station may be the target base station; or the first base station may be the anchor base station or the current serving base station of the UE, and the second base station is the next serving base station of the UE. For example, the first base station sends the first indication information and/or the second indication information to the second base station through a UE context response message or a message related to handover of the UE from the first base station to the second base station. The second indication information is information received by the first base station from the UE that indicates whether the UE supports a second eDRX cycle less than or equal to a pre-defined value. After the second base station receives the first indication information and/or the second indication information and the UE hands over, selects or reselects to the second base station, it is no longer necessary to receive the first indication information and/or the second indication information from the UE.

In some other embodiments, the method further includes:
after receiving the first indication information, the first base station sending the first indication information to the core network device. For example, the core network device includes but is not limited to an MME or an AMF. For example, the first base station may send the first indication information to the core network device through various messages, for example, through any message such as UE initial registration message, tracking area update message or attachment message. After receiving the first indication information, the CN device may configure the idle mode eDRX parameter, etc. with reference to the first indication information.

The UE sending the first indication information to the first base station may include:
when the UE supports the eDRX function in the idle state, sending the first indication information to the first base station; in this case, since the UE sends the first indication information when it supports the eDRX function in the idle state, the first base station, the second base station and/or the CN device may consider that the UE supports the eDRX function in the idle state when receiving the first indication information;
   or
when the UE supports the second eDRX cycle in the inactive state, sending the first indication information to the first base station. If the UE sends the first indication information when supporting the second eDRX cycle in the inactive state, the first base station, the second base station and/or the CN device may consider that the UE supports the second eDRX cycle in the inactive state by default if receiving the first indication information.

As shown in FIG. 6, an embodiment of the present disclosure provides an information processing apparatus, the apparatus includes a first sending module 110.

The first sending module 110 is configured to send first indication information, in which the first indication information is used to determine whether a UE supports a first eDRX cycle in an inactive state, and a duration of the first eDRX cycle is greater than a pre-defined value.

The information processing apparatus may be the UE.

The information processing apparatus may further include a storage module, which is connected to the first sending module 110 and may be used to at least store the first indication information.

It can be understood that the first sending module 110 is further configured to send an RRC message containing UE capability information of the first indication information; or send an RRC connection setup complete message containing the first indication information; or send an RRC connection recovery complete message containing the first indication information.

It can be understood that the first sending module 110 is further configured to send the first indication information in response to the UE supporting an eDRX function in an idle state; or send the first indication information in response to the UE supporting a second eDRX cycle in the inactive state, in which a duration of the second eDRX cycle is less than or equal to the pre-defined value.

It can be understood that the first sending module 110 is configured to send the first indication information in response to the UE supporting the eDRX function in the idle state and supporting the second eDRX cycle in the inactive state; or send second indication information, in which the second indication information is used to indicate whether the UE supports the second eDRX cycle in the inactive state, and the duration of the second eDRX cycle is less than or equal to the pre-defined value.

It can be understood that the first sending module 110 is further configured to send the first indication information in response to the UE supporting the first eDRX cycle in the inactive state.

In some embodiments, the apparatus further includes:
a first determining module configured to determine not to send the first indication information in response to the UE not supporting the first eDRX cycle in the inactive state.

In some embodiments, the first sending module 110 is further configured to send the second indication information, in which the second indication information is used to determine whether the UE supports a second eDRX cycle whose duration is less than or equal to the pre-defined value.

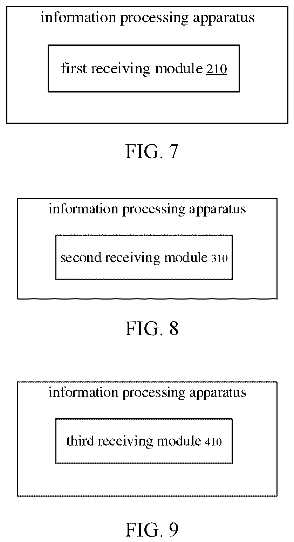

As shown in FIG. 7, an embodiment of the present disclosure provides an information processing apparatus, the apparatus includes a first receiving module 210.

The first receiving module 210 is configured to receive first indication information, in which the first indication information is used to determine whether a UE supports a first eDRX cycle in an inactive state, and a duration of the first eDRX cycle is greater than a pre-defined value.

In some embodiments, the information processing apparatus may correspond to a first base station. The first base station may be an eNB or a gNB, etc.

The first receiving module 210 may be a program module, and after the program module is executed by a processor, the above operations may be implemented.

The first receiving module 210 may be a software-hardware combined module, and the software-hardware combined module may include various programmable arrays; the programmable arrays include but are not limited to field programmable arrays and/or complex programmable arrays.

The first receiving module 210 may be a pure hardware module, which includes but is not limited to a dedicated integrated circuit. It can be understood that the first receiving module 210 is configured to send an RRC message containing UE capability information of the first indication information; or send an RRC connection setup complete message containing the first indication information; or send an RRC connection recovery complete message containing the first indication information.

It can be understood that the apparatus further includes:
a second determining module, configured to, in response to receiving the first indication information, determine that the UE supports the eDRX function in the idle state and determine whether the UE supports the first eDRX cycle according to the first indication information;
   or
a second determining module, configured to, in response to receiving the first indication information, determine that the UE supports the second eDRX cycle in the inactive state, and determine, and determine whether the UE supports the first eDRX cycle according to the first indication information.

In some embodiments, the apparatus further includes:
a fifth determining module, configured to receive second indication information, and determine whether the terminal supports a second eDRX cycle in an inactive state according to the second indication information;
in which a duration of the second eDRX cycle is less than or equal to a pre-defined value.

In some embodiments, the apparatus further includes:
a sixth determining module, configured to, in response to receiving the first indication information, determine that the UE supports the first eDRX cycle; or in response to not receiving the first indication information, determine that the UE does not support the first eDRX cycle.

In some embodiments, the apparatus further includes:
a second sending module, configured to send the first indication information, in which the first indication information is used for the second base station or a core network device to determine whether the UE supports the first eDRX cycle.

In some embodiments, the second sending module is configured to send a UE context response message containing the first indication information; or send a message related to handover of the UE from the first base station to the second base station, in which the message related to the handover of the UE from the first base station to the second base station includes the first indication information; or send an initial UE message containing the first indication information.

As shown in FIG. 8, an embodiment of the present disclosure provides an information processing apparatus, the apparatus includes a second receiving module 310.

The second receiving module 310 is configured to receive first indication information, in which the first indication information is used to determine whether a UE supports a first eDRX cycle in an inactive state, and a duration of the first eDRX cycle is greater than a pre-defined value.

In some embodiments, the information processing apparatus may correspond to a second base station.

The second receiving module 310 may be a program module, and after the program module is executed by a processor, the above operations may be implemented.

The second receiving module 310 may be a software-hardware combined module, and the software-hardware combined module may include various programmable arrays; the programmable arrays include but are not limited to field programmable arrays and/or complex programmable arrays.

The second receiving module 310 may be a pure hardware module, which includes but is not limited to a dedicated integrated circuit.

In some embodiments, the second receiving module 310 is configured to receive a UE context response message containing the first indication information; or receive a message related to handover of the UE from the first base station to the second base station, in which the message related to the handover of the UE from the first base station to the second base station includes the first indication information.

As shown in FIG. 9, an embodiment of the present disclosure provides an information processing apparatus, the apparatus includes a third receiving module 410.

The third receiving module 410 is configured to receive first indication information, in which the first indication information is used to determine whether a UE supports a first eDRX cycle in an inactive state, and a duration of the first eDRX cycle is greater than a pre-defined value. For example, the third receiving module 410 is configured to receive the first indication information from the first base station.

In some embodiments, the information processing apparatus may correspond to a core network device. The core network device may include but is not limited to an MME or an AMF.

The third receiving module 410 may be a program module, and after the program module is executed by a processor, the above operations may be implemented.

The third receiving module 410 may be a software-hardware combined module, and the software-hardware combined module may include various programmable arrays; the programmable arrays include but are not limited to field programmable arrays and/or complex programmable arrays.

The third receiving module 410 may be a pure hardware module, which includes but is not limited to a dedicated integrated circuit.

In some embodiments, the apparatus further includes:
a sixth determining module, configured to determine an idle mode eDRX parameter of the UE according to the first indication information.

The embodiments of the present disclosure provide a communication device, including:
a memory for storing instructions executable by a processor, and
the processor connected to the memory.

The processor is configured to perform the information processing method of any of the technical solutions of the present disclosure.

The processor may include various types of storage media, which may be non-temporary computer storage media that can continue to memorize information stored thereon after the user device loses power.

Here, the communication device may include: a UE or a network device. The network device may include the first base station, the second base station and/or the core network device described above.

The processor may be connected to the memory through a bus or the like, and may be used to read an executable program stored in the memory, for example, at least one of the methods shown in FIG. 1C, FIGS. 2A to 2J, or FIGS. 3A to 3L.

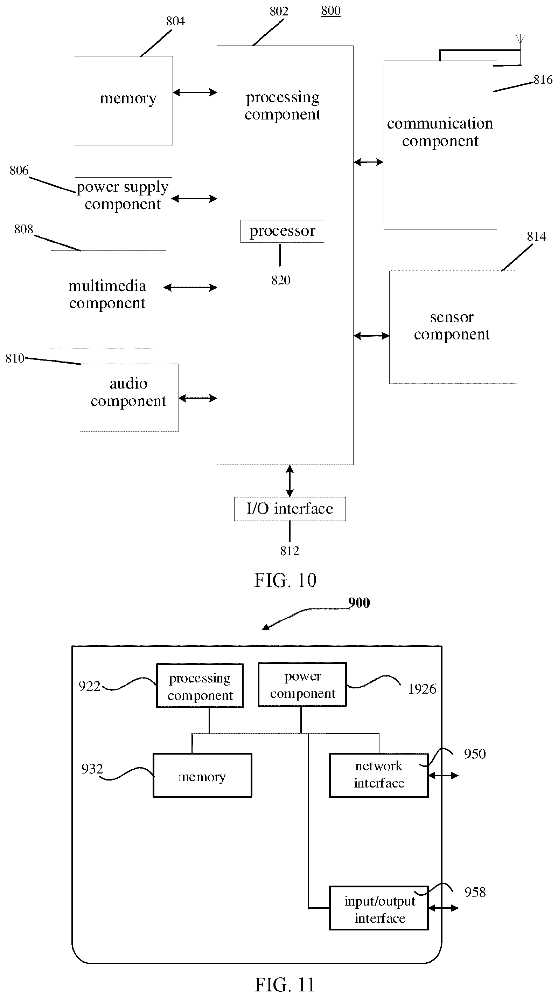

FIG. 10 is a schematic block diagram of a UE 800 according to an embodiment of the present disclosure. For example, the UE 800 may be a mobile phone, a computer, a digital broadcasting terminal, a message transceiver device, a gaming console, a tablet device, a medical device, a fitness device, a personal digital assistant, etc.

Referring to FIG. 10, the UE 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operations of the UE 800, such as operations associated with displays, telephone calls, data communications, camera operations, and recording operations. The processing component 802 may include one or more processors 820 to execute instructions to accomplish all or some of the steps of the method described above. Alternatively, the processing component 802 may include one or more modules to facilitate interactions between the processing component 802 and other components. For example, the processing component 802 may include a multimedia module to facilitate interactions between the multimedia component 808 and the processing component 802.

The memory 804 is configured to store various types of data to support operation at the UE 800. Examples of such data include instructions for any application or method operated on the UE 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 806 provides power to the various components of the UE 800. The power supply component 806 may include a power management system, one or more power supplies, and other components associated with generating, managing, and distributing power for the UE 800.

The multimedia component 808 includes a screen providing an output interface between the UE 800 and a user. In some embodiments, the screen may include a liquid crystal display (LCD) and a touch panel (TP). In the case that the screen includes a touch panel, the screen may be implemented as a touch screen to receive input signals from the user. If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the UE 800 is in an operating mode, such as a shooting mode or a video mode, the front camera and/or the rear camera may receive external multimedia data. Each front camera and rear camera may be a fixed optical lens system or have a focal length and optical zoom capability.

The audio component 810 is configured to output and/or input audio signals. For example, the audio component 810 includes a microphone (MIC) that is configured to receive external audio signals when the UE 800 is in an operating mode, such as a call mode, a recording mode, and a voice recognition mode. The received audio signals may be further stored in the memory 804 or sent in the communication component 816. In some embodiments, the audio component 810 further includes a speaker for outputting audio signals.

The I/ O interface 812 provides an interface between the processing component 802 and a peripheral interface module, said peripheral interface module may be a keypad, a click wheel, buttons, etc. These buttons may include, but are not limited to: a home button, a volume button, a start button, and a lock button.

The sensor component 814 includes one or more sensors for providing various aspects of status assessment for the UE 800. For example, the sensor component 814 can detect the open/closed state of the UE 800, the relative positioning of components, such as the display and keypad of the UE 800, and the sensor component 814 can also detect the position change of the UE 800 or a component of the UE 800, the presence or absence of contact between the user and the UE 800, the orientation or acceleration/deceleration of the UE 800, and the temperature change of the UE 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 816 is configured to facilitate communication between the UE 800 and other devices by wired or wireless means. The UE 800 may access a wireless network based on a communication standard, such as Wi-Fi, 2G or 3G, or their combination. In an exemplary embodiment, the communication component 816 receives broadcast signals or broadcast-related information from an external broadcast management system in a broadcast channel. In an exemplary embodiment, the communication component 816 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In example embodiments, the UE 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In example embodiments, there is also provided a non-transitory computer-readable storage medium including instructions, such as a memory 804 including instructions, the instructions being executable by a processor 820 of the UE 800 for accomplishing the above-described method. For example, the non-transitory computer-readable storage medium may be a ROM, a random access memory (RAM), a CD-ROM, a magnetic tape, floppy disks, and optical data storage devices, etc.

As shown in FIG. 11, an embodiment of the present disclosure shows a structure of a network device. The network device may be the first base station, the second base station and/or the second base station described above. Referring to FIG. 11, the network device 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to execute any method of the aforementioned method applied to the access device, for example, at least one of the methods shown in FIG. 1C, FIGS. 2A to 2J, or FIGS. 3A to 3J.

The network device 900 may also include a power supply component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server ^{™}, Mac OS X ^{™}, Unix ^{™}, Linux ^{™}, FreeBSD ^{™} or the like.

In the absence of contradiction, each step in a certain implementation mode or example can be implemented as an independent example, and the steps can be arbitrarily combined. For example, a solution after removing some steps in a certain implementation mode or example may also be implemented as an independent example, and the order of the steps in a certain implementation mode or example may be arbitrarily exchanged. In addition, the optional methods or optional examples in a certain implementation mode or example can be arbitrarily combined; in addition, the various implementation modes or examples may be arbitrarily combined. For example, some or all steps of different implementation modes or examples may be arbitrarily combined, and a certain implementation mode or example may be arbitrarily combined with the optional methods or optional examples of other implementation modes or examples.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein. The description and the embodiments are to be regarded as exemplary, and the true scope and spirit of the disclosure are indicated in the following claims.

It should be understood that the disclosure is not limited to the precise structures described above and illustrated in the accompanying drawings, and that various modifications and changes may be made without departing from its scope. The scope of the disclosure is limited only by the appended claims.

## Claims

1. An information processing method, performed by a user equipment (UE), comprising:
sending first indication information, wherein the first indication information is used to determine whether the UE supports a first extended discontinuous reception (eDRX) cycle in an inactive state, and a duration of the first eDRX cycle is greater than a pre-defined value.

2. The method of claim 1, wherein sending the first indication information comprises:
sending a radio resource control (RRC) message comprising UE capability information of the first indication information; or
sending an RRC connection setup complete message comprising the first indication information; or
sending an RRC connection recovery complete message comprising the first indication information.

3. The method of claim 1 or 2, wherein sending the first indication information comprises:
sending the first indication information in response to the UE supporting an eDRX function in an idle state; or
sending the first indication information in response to the UE supporting a second eDRX cycle in the inactive state, wherein a duration of the second eDRX cycle is less than or equal to the pre-defined value.

4. The method of claim 3, wherein sending the first indication information in response to the UE supporting the eDRX function in the idle state, the method further comprises:
sending second indication information, wherein the second indication information indicates whether the UE supports the second eDRX cycle in the inactive state, and the duration of the second eDRX cycle is less than or equal to the pre-defined value.

5. The method of any of claims 1-4, wherein sending the first indication information comprises:
sending the first indication information in response to the UE supporting the first eDRX cycle in the inactive state.

6. The method of claim 5, further comprising:
determining not to send the first indication information in response to the UE not supporting the first eDRX cycle in the inactive state.

7. The method of claim 1 or 2, further comprising:
sending second indication information, wherein the second indication information indicates whether the UE supports a second eDRX cycle in the inactive state, and a duration of the second eDRX cycle is less than or equal to the pre-defined value.

8. An information processing method, performed by a base station or a core network (CN) device, comprising:
receiving first indication information, wherein the first indication information is used to determine whether a user equipment (UE) supports a first extended discontinuous reception (eDRX) cycle in an inactive state, and a duration of the first eDRX cycle is greater than a pre-defined value.

9. The method of claim 8, wherein receiving the first indication information comprises:
receiving a radio resource control (RRC) message comprising UE capability information of the first indication information; or
receiving an RRC connection setup complete message comprising the first indication information; or
receiving an RRC connection recovery complete message comprising the first indication information.

10. The method of claim 8 or 9, further comprising:
determining, based on the first indication information, whether the UE supports the first eDRX cycle.

11. The method of claim 8 or 9, further comprising:
determining that the UE supports an eDRX function in an idle state in response to receiving the first indication information; or
determining that the UE supports a second eDRX cycle in the inactive state in response to receiving the first indication information.

12. The method of claim 8 or 9, further comprising:
receiving second indication information; and
determining, based on the second indication information, whether the UE supports a second eDRX cycle in the inactive state;
wherein a duration of the second eDRX cycle is less than or equal to the pre-defined value.

13. The method of claim 8 or 9, further comprising:
determining that the UE supports the first eDRX cycle in response to receiving the first indication information; or
determining that the UE does not support the first eDRX cycle in response to not receiving the first indication information.

14. The method of any of claims 8-13, further comprising:
sending the first indication information in response to the base station being a first base station, wherein the first indication information is used for a second base station or the CN device to determine whether the UE supports the first eDRX cycle.

15. The method of claim 14, wherein sending the first indication information comprises:
sending a UE context response message comprising the first indication information; or
sending a message related to handover of the UE from the first base station to the second base station, wherein the message related to handover of the UE from the first base station to the second base station comprises the first indication information; or
sending an initial UE message comprising the first indication information.

16. The method of any of claims 8-13, wherein in response to the base station being a second base station, receiving the first indication information comprises:
receiving a UE context response message comprising the first indication information; or
receiving a message related to handover of the UE from a first base station to the second base station, wherein the message related to handover of the UE from the first base station to the second base station comprises the first indication information.

17. The method of any of claims 8-13, wherein in response to the information processing method being performed by the CN device, the method further comprises:
determining an eDRX parameter of the UE in an idle state according to the first indication information.

18. An information processing apparatus, comprising:
a first sending module, configured to send first indication information, wherein the first indication information is used to determine whether the UE supports a first extended discontinuous reception (eDRX) cycle in an inactive state, and a duration of the first eDRX cycle is greater than a pre-defined value.

19. An information processing apparatus, comprising:
a first receiving module, configured to receive first indication information, wherein the first indication information is used to determine whether a user equipment (UE) supports a first extended discontinuous reception (eDRX) cycle in an inactive state, and a duration of the first eDRX cycle is greater than a pre-defined value.

20. A communication device, comprising a processor, a transceiver, a memory, and an executable program stored on the memory and executable by the processor, wherein the processor is configured to perform the method of any one of claims 1 to 7, or 8-17 when executing the executable program.

21. A computer storage medium for storing an executable program, wherein when the executable program is executed by a processor, the method of any one of claims 1 to 7, or 8-17 is implemented.
